# EUROPÄISCHE PATENTSCHRIFT

(11) **EP 3 363 669 B1**
(45) Veröffentlichungstag und Bekanntmachung des Hinweises auf die Patenterteilung: **06.04.2022**
(21) Anmeldenummer: 18155055.9
(22) Anmeldetag: 05.02.2018
(51) Int. Cl.: B60K 6/48, B60K 6/36, B60K 6/365, B60K 6/383, B60K 6/547, B60K 25/00, B60K 25/02, B60K 25/06

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE AUTOMOBILE

(30) Priorität: 16.02.2017 DE 102017202484
(43) Veröffentlichungstag der Anmeldung: 22.08.2018
(73) Patentinhaber: AUDI AG, 85045 Ingolstadt (DE)
(72) Erfinder: Jägle, Karl, 85051 Ingolstadt (DE); Hoffmann, Thomas, 93339 Riedenburg (DE); Störmer, Markus, 92334 Berching (DE)

(56) Entgegenhaltungen:
- EP-A1- 3 305 572
- DE-A1-102006 037 576
- DE-A1-102008 006 578
- DE-A1-102010 036 235

## Beschreibung

Die Erfindung betrifft eine Antriebseinrichtung für ein Kraftfahrzeug mit einem als Brennkraftmaschine ausgestalteten ersten Antriebsaggregat, einem als elektrische Maschine ausgestalteten zweiten Antriebsaggregat sowie einem wenigstens ein Nebenaggregat aufweisenden Nebentrieb, der über ein Umlaufrädergetriebe mit dem ersten Antriebsaggregat und dem zweiten Antriebsaggregat jeweils gekoppelt oder koppelbar ist, wobei der Nebentrieb mit einem ersten Getriebeelement des Umlaufrädergetriebes gekoppelt ist, wobei ein zweites Getriebeelement des Umlaufrädergetriebes über ein drehzahlabhängig geschaltetes Gangwechselgetriebe mit einer unter Umgehung des Umlaufrädergetriebes mit dem ersten Antriebsaggregat gekoppelten oder koppelbaren Nebentriebantriebswelle gekoppelt ist, wobei das Gangwechselgetriebe mittels eines mit der Nebentriebantriebswelle gekoppelten Fliehkraftstellers angesteuert ist.

Aus dem Stand der Technik ist beispielsweise die Druckschrift DE 10 2006 037 576 A1 bekannt. Diese betrifft eine Nebenaggregatantrieb für ein Kraftfahrzeug mit einem Planetengetriebe, wobei ein Sonnenrad des bleiben Getriebes mit einer ersten Elektromaschine, ein Planetenradträger mit einem Verbrennungsmotor und ein erstes Hohlrad mit mindestens einem Nebenaggregat im Leistungsaustausch stehen. Um sowohl beim Starten des Verbrennungsmotors als auch beim antreiben des Fahrzeuges durch die erste Elektromaschine einen hohen Wirkungsgrad aufzuweisen, weist der Nebenaggregat Antrieb zwei Planetenradsätze, die mit ihren Achsen im Planetenrad gelagert sind, ein zweites Hohlrad, dass durch eine Bremse stillgehalten werden kann, wobei der erste Planetenradsatz mit dem ersten Hohlrad und dem Sonnenrad kämmt und der zweite Planetenradsatz mit dem zweiten Hohlrad und dem ersten Planetenradsatz kämmt, eine erste Kupplung, durch die der Verbrennungsmotor mit der ersten Elektromaschine koppelbar ist, und einen ersten Freilauf auf, durch den der Planeten Radträger nur in eine Drehrichtung drehbar ist.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung stellt das Drehmoment, welches auch als Antriebsdrehmoment bezeichnet werden kann, an einer Abtriebswelle der Antriebseinrichtung bereit. Beispielsweise ist die Abtriebswelle starr und/oder permanent mit einer Radachse des Kraftfahrzeugs oder wenigstens einem Rad des Kraftfahrzeugs, welches der Radachse zugeordnet sein kann, wirkverbunden. Die Wirkverbindung zwischen der Abtriebswelle und der Radachse beziehungsweise dem Rad kann über ein Getriebe, beispielsweise ein Differentialgetriebe, insbesondere ein Mittendifferentialgetriebe und/oder ein Achsdifferentialgetriebe, hergestellt sein.

Die Antriebseinrichtung verfügt über mehrere Antriebsaggregate, nämlich zumindest über das erste Antriebsaggregat und das zweite Antriebsaggregat. Die beiden Antriebsaggregate sind unterschiedlichen Typs, sodass die Antriebseinrichtung insoweit als Hybridantriebseinrichtung ausgestaltet ist. Das erste Antriebsaggregat liegt in Form einer Brennkraftmaschine vor und das zweite Antriebsaggregat ist als elektrische Maschine ausgestaltet.

Zusätzlich zu den beiden Antriebsaggregaten verfügt die Antriebseinrichtung über den Nebentrieb, der das wenigstens eine Nebenaggregat enthält. Der Nebentrieb ist über das Umlaufrädergetriebe mit dem ersten Antriebsaggregat und dem zweiten Antriebsaggregat jeweils gekoppelt oder koppelbar. Das bedeutet, dass der Nebentrieb über das Umlaufrädergetriebes mittels des ersten Antriebsaggregats, mittels des zweiten Antriebsaggregats oder mittels sowohl des ersten Antriebsaggregats als auch des zweiten Antriebsaggregats antreibbar ist. Der Nebentrieb kann über das Umlaufrädergetriebe mit dem jeweiligen Antriebsaggregat gekoppelt sein, nämlich beispielsweise permanent. Alternativ ist er lediglich koppelbar, sodass die Wirkverbindung zwischen dem Nebenbetrieb und dem jeweiligen Antriebsaggregat lediglich zeitweise vorliegt beziehungsweise hergestellt wird.

Der Nebentrieb ist an das erste Getriebeelement des Umlaufrädergetriebes angeschlossen. Grundsätzlich verfügt das Umlaufrädergetriebe über mehrere Getriebeelemente, nämlich über das erste Getriebeelement, über ein zweites Getriebeelement und über ein drittes Getriebeelement. Eines der Getriebeelemente kann als Umlaufradträger ausgestaltet sein, an welchem wenigstens ein Umlaufrad drehbar gelagert ist. Ein weiteres der Getriebeelemente ist als Sonnenrad und ein drittes der Getriebeelemente als Hohlrad ausgestaltet. Das Umlaufrad kämmt nun sowohl mit dem Sonnenrad als auch mit dem Hohlrad. Auch andere Ausgestaltungen des Umlaufrädergetriebes können jedoch realisiert sein.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere sich durch eine hohe Energieeffizienz sowie eine hohe Flexibilität auszeichnet.

Dies wird erfindungsgemäß mit einer Antriebseinrichtung mit den Merkmalen des Anspruchs 1 erreicht. Dabei ist vorgesehen, dass das zweite Antriebsaggregat mit einem dritten Getriebeelement des Umlaufrädergetriebes gekoppelt oder koppelbar ist.

Grundsätzlich ist vorgesehen, dass ein zweites Getriebeelement des Umlaufrädergetriebes über ein drehzahlabhängig geschaltetes Gangwechselgetriebe mit einer mit dem ersten Antriebsaggregat gekoppelten oder koppelbaren Nebentriebantriebswelle gekoppelt ist.

Grundsätzlich soll der Nebentrieb derart in die Antriebseinrichtung integriert sein, dass er beziehungsweise das wenigstens eine Nebenaggregat besonders energieeffizient betrieben werden kann, während gleichzeitig die Antriebseinrichtung flexibel einsetzbar ist, insbesondere in zahlreichen Betriebszuständen des Kraftfahrzeugs. Insbesondere soll eine Wechselwirkung zwischen wenigstens einem der Antriebsaggregate, insbesondere beiden Antriebsaggregaten, und dem Nebentrieb realisiert sein. Das bedeutet, dass der Nebentrieb beziehungsweise eine Nebentriebwelle des Nebentriebs bevorzugt wahlweise mittels des ersten Antriebsaggregats, des zweiten Antriebsaggregats und/oder mittels kinetischer Energie des Kraftfahrzeugs angetrieben werden kann.

Letzteres kann durch eine von dem ersten Antriebsaggregat unabhängige Anbindung des Nebentriebs beziehungsweise der Nebentriebwelle an die Nebentriebantriebswelle der Antriebseinrichtung realisiert sein. Beispielsweise ist die Nebentriebantriebswelle mit der Abtriebswelle der Antriebseinrichtung gekoppelt, insbesondere starr und/oder permanent gekoppelt oder zumindest koppelbar. Entsprechend ist die Nebentriebantriebswelle auch mit dem ersten Antriebsaggregat gekoppelt oder zumindest koppelbar. Beispielsweise ist es vorgesehen, dass die Nebentriebantriebswelle mit der wenigstens einen Radachse des Kraftfahrzeugs gekoppelt, insbesondere starr und/oder permanent gekoppelt, oder koppelbar ist. Die Nebentriebantriebswelle beziehungsweise das zweite Getriebeelement des Umlaufrädergetriebes ist unter Umgehung des Umlaufrädergetriebes und/oder unter Umgehung des zweiten Antriebsaggregats mit dem ersten Antriebsaggregat gekoppelt oder koppelbar.

Dabei ist es vorgesehen, dass die Nebentriebantriebswelle mit dem Umlaufrädergetriebe gekoppelt ist, nämlich über das drehzahlabhängig geschaltete Gangwechselgetriebe. Genauer gesagt ist die Nebenantriebswelle über das Gangwechselgetriebe mit dem zweiten Getriebeelement des Umlaufrädergetriebes gekoppelt, also mit einem von dem ersten Getriebeelement verschiedenen Getriebeelement. Der Nebentrieb beziehungsweise das wenigstens eine Nebenaggregat ist wiederum mit dem ersten Getriebeelement des Umlaufrädergetriebes gekoppelt beziehungsweise wirkverbunden, insbesondere starr und/oder permanent. Das bedeutet, dass der Nebentrieb beziehungsweise die Nebentriebwelle stets dieselbe Drehzahl aufweist wie das Getriebeelement mit welchem er beziehungsweise sie gekoppelt ist.

Der Nebentrieb verfügt über die Nebentriebwelle, mit welcher das wenigstens eine Nebenaggregat gekoppelt ist, vorzugsweise starr und/oder permanent. Besonders bevorzugt sind mehrere Nebenaggregate mit der Nebentriebwelle verbunden. Zwischen der Nebentriebwelle und den Nebenaggregaten kann jeweils dieselbe Übersetzung vorgesehen sein. Alternativ können für die verschiedenen Nebenaggregate auch unterschiedliche Übersetzungen zwischen der Nebentriebwelle und den Nebenaggregaten vorgesehen sein.

Vorzugsweise ist die Nebentriebwelle über das Umlaufrädergetriebe mit dem zweiten Antriebsaggregat gekoppelt, insbesondere permanent, oder zumindest koppelbar. Das zweite Antriebsaggregat ist hierzu mit einem anderen Getriebeelement des Umlaufrädergetriebes gekoppelt oder koppelbar. Mittels des zweiten Antriebsaggregats kann so zum Beispiel eine Drehzahlregelung der Nebentriebwelle vorgenommen werden. Beispielsweise ist dabei das zweite Antriebsaggregat über das Umlaufrädergetriebe mit der Nebentriebantriebswelle und/oder der Abtriebswelle gekoppelt, insbesondere starr und/oder permanent, oder zumindest koppelbar. Die Nebentriebantriebswelle beziehungsweise die Abtriebswelle ist hierzu an das zweite Getriebeelement des Umlaufrädergetriebes angebunden, sodass also zweites Antriebsaggregat, Nebentriebwelle und Nebentriebantriebswelle beziehungsweise Abtriebswelle mit unterschiedlichen Getriebeelementen des Umlaufrädergetriebes gekoppelt sind.

Zusätzlich oder alternativ ist die Nebentriebwelle über das Umlaufrädergetriebe und das zweite Antriebsaggregat mit dem ersten Antriebsaggregat wirkverbindbar. Entsprechend kann die Nebentriebwelle mithilfe des ersten Antriebsaggregats, bevorzugt mithilfe sowohl des ersten Antriebsaggregats als auch des zweiten Antriebsaggregats, angetrieben werden. Wenn zudem das Umlaufrädergetriebe mit der Abtriebswelle der Antriebseinrichtung gekoppelt oder zumindest koppelbar ist, was bevorzugt der Fall ist, kann zudem die kinetische Energie des Kraftfahrzeugs zum Antrieben der Nebentriebwelle und mithin des Nebenaggregats herangezogen werden.

Das Gangwechselgetriebe, über welches die Nebentriebantriebswelle mit dem zweiten Getriebeelement gekoppelt ist, ermöglicht das Einstellen unterschiedlicher Übersetzungen zwischen diesen. Das Gangwechselgetriebe weist also wenigstens zwei Gänge auf, die über unterschiedliche Übersetzungen verfügen. Das Gangwechselgetriebe ist drehzahlabhängig geschaltet. Das bedeutet, dass der an dem Gangwechselgetriebe eingestellte Gang beziehungsweise die eingestellte Übersetzung von einer Drehzahl abhängt, insbesondere der Drehzahl der Nebentriebantriebswelle oder der Drehzahl des zweiten Getriebeelements oder der Drehzahl des Nebentriebs beziehungsweise der Nebentriebwelle.

Beispielsweise ist es also vorgesehen, in Abhängigkeit von der Fahrgeschwindigkeit des Kraftfahrzeugs und entsprechend in Abhängigkeit von der Drehzahl der Abtriebswelle und mithin der Drehzahl der Nebentriebantriebswelle eine Übersetzung aus den mehreren Übersetzungen des Gangwechselgetriebes auszuwählen und an diesem einzustellen. Das drehzahlabhängige Schalten des Gangwechselgetriebes kann mittels rein mechanischer Mittel und/oder elektronisch erfolgen. In letzterem Fall ist beispielsweise ein Drehzahlsensor vorgesehen. Ein mit dem Drehzahlsensor verbundenes Steuergerät wählt anhand der mittels des Drehzahlsensors gemessenen Drehzahl die passende Übersetzung aus den mehreren Übersetzungen aus und stellt diese an dem Gangwechselgetriebe ein.

Ein derartiger Aufbau der Antriebseinrichtung ermöglicht eine äußerst flexible Verwendung. So kann es beispielsweise vorgesehen sein, mittels des zweiten Antriebsaggregats die Nebentriebwelle anzutreiben und/oder ein Drehmoment auf die Abtriebswelle der Antriebseinrichtung aufzuprägen, beispielsweise zum Antreiben oder zum Abbremsen des Kraftfahrzeugs. Zudem kann mithilfe des zweiten Antriebsaggregats die Drehzahl der Nebentriebwelle gesteuert und/oder geregelt werden, insbesondere auf eine Solldrehzahl. Auch kann es bei entsprechender Ausgestaltung vorgesehen sein, das erste Antriebsaggregat mithilfe des zweiten Antriebsaggregats zu starten, sodass also das zweite Antriebsaggregat als Starter für das erste Antriebsaggregat vorliegt. Ist neben dem ersten Antriebsaggregat und dem zweiten Antriebsaggregat ein weiteres Antriebsaggregat vorgesehen, so kann dieses mithilfe des zweiten Antriebsaggregats zumindest kurzzeitig entlastet werden. Auch kann die Dauerleistung der Antriebseinrichtung zumindest geringfügig erhöht werden.

Weiterhin ergibt sich bei entsprechender Ausgestaltung der Vorteil, dass das Antreiben der Nebentriebwelle unter Verwendung der kinetischen Energie des Kraftfahrzeugs ein Bremsen des Kraftfahrzeugs bewirkt. Dies ist vorteilhaft, wenn ein rekuperierendes Bremsen des Kraftfahrzeugs mithilfe des zweiten Antriebsaggregats und/oder des weiteren Antriebsaggregats nicht möglich ist, beispielsweise weil der Energiespeicher keine weitere Energie aufnehmen kann, insbesondere weil er vollständig gefüllt ist. Insgesamt wird durch die Integration des Nebentriebs in die Antriebseinrichtung eine hochintegrierte Antriebseinrichtung realisiert, welche in zahlreichen Betriebszuständen des Kraftfahrzeugs besonders energieeffizient betrieben werden kann.

Die Erfindung sieht vor, dass das Gangwechselgetriebe mittels eines mit der Nebentriebantriebswelle gekoppelten Fliehkraftstellers angesteuert ist. Das Schalten des Gangwechselgetriebes erfolgt also in Abhängigkeit von der Drehzahl der Nebentriebantriebswelle. Der Fliehkraftsteller ist mit der Nebentriebantriebswelle gekoppelt, insbesondere starr und/oder permanent. Beispielsweise weist der Fliehkraftsteller wenigstens ein federkraftbeaufschlagtes Fliehkraftelement auf, wobei die mittels des Federelements bewirkte Federkraft der Fliehkraft entgegengerichtet ist. Bei einer Rotation der Nebentriebantriebswelle wird das Fliehkraftelement entgegen der Federkraft ausgelenkt.

Der Fliehkraftsteller beziehungsweise sein Fliehkraftelement ist mit dem Gangwechselgetriebe gekoppelt, insbesondere mit einer Schaltmuffe des Gangwechselgetriebes. Beispielsweise koppelt der Fliehkraftsteller in Abhängigkeit von der Drehzahl der Nebentriebantriebswelle jeweils genau eines von mehreren Zahnradpaaren, welche unterschiedliche Übersetzungen zwischen der Nebentriebantriebswelle und dem zweiten Getriebeelement bewirken, mit der Nebentriebantriebswelle oder dem zweiten Getriebeelement. Der Fliehkraftsteller stellt das vorstehend bereits erwähnte rein mechanische Mittel zum Schalten beziehungsweise Ansteuern des Gangwechselgetriebes dar.

Im Rahmen einer weiteren Ausführungsform der Erfindung ist vorsehen, dass der Fliehkraftsteller drehzahlabhängig einen ausgangsseitig mit dem Umlaufrädergetriebe gekoppelten Zahnradsatz oder einen von mehreren ausgangsseitig mit dem Umlaufrädergetriebe gekoppelten Zahnradsätzen mit der Nebentriebantriebswelle koppelt. Hierauf wurde vorstehend bereits hingewiesen. Der Zahnradsatz beziehungsweise die Zahnradsätze weisen (jeweils) eine Eingangsseite und eine Ausgangsseite auf. Ausgangsseitig ist der Zahnradsatz beziehungsweise sind die Zahnradsätze vorzugsweise mit dem Umlaufrädergetriebe, nämlich dem zweiten Getriebeelement des Umlaufrädergetriebes, gekoppelt, vorzugsweise starr und/oder permanent. Eingangsseitig koppelt der Fliehkraftsteller drehzahlabhängig den Zahnradsatz beziehungsweise einen der Zahnradsätze mit der Nebentriebantriebswelle.

Eine Weiterbildung der Erfindung sieht vor, dass ein weiterer Zahnradsatz eingangsseitig mit der Nebentriebantriebswelle gekoppelt und ausgangsseitig mit dem zweiten Getriebeelement über einen Zahnradfreilauf verbunden ist. Der weitere Zahnradsatz liegt vorzugsweise vor, wenn vorstehend lediglich der vorstehend beschriebene eine Zahnradsatz realisiert ist. Das Umlaufrädergetriebe umfasst insoweit den Zahnradsatz und den weiteren Zahnradsatz, vorzugsweise ausschließlich. Der weitere Zahnradsatz ist bevorzugt mit der Nebentriebantriebswelle gekoppelt, insbesondere starr und/oder permanent.

Ausgangsseitig ist der weitere Zahnradsatz über den Zahnradfreilauf mit dem zweiten Getriebeelement verbunden. Der weitere Zahnradsatz wird insoweit nicht aktiv mittels des Fliehkraftstellers angesteuert. Ein solches Ansteuern ist lediglich für den vorstehend erwähnten Zahnradsatz vorgesehen. Der Zahnradfreilauf ist derart zwischen dem weiteren Zahnradsatz und dem zweiten Getriebeelement angeordnet, dass er den weiteren Zahnradsatz von diesem entkoppelt, sobald mittels des Fliehkraftstellers der Zahnradsatz eingangsseitig mit der Nebentriebantriebswelle gekoppelt wird beziehungsweise ist.

Die Erfindung sieht vor, dass das zweite Antriebsaggregat mit einem dritten Getriebeelement des Umlaufrädergetriebes gekoppelt oder koppelbar ist. Das dritte Getriebeelement ist von dem ersten Getriebeelement und dem zweiten Getriebeelement verschieden. Insoweit ist das zweite Antriebsaggregat lediglich über das Umlaufrädergetriebe mit dem Nebentrieb und/oder der Nebentriebantriebswelle gekoppelt beziehungsweise koppelbar.

Eine weitere Ausführungsform der Erfindung sieht vor, dass das zweite Antriebsaggregat über einen ersten Freilauf mit dem ersten Antriebsaggregat verbunden und/oder mittels einer Schaltkupplung mit dem ersten Antriebsaggregat koppelbar ist. In der Verbindung zwischen dem zweiten Antriebsaggregat und dem ersten Antriebsaggregat liegen insoweit der erste Freilauf und/oder die Schaltkupplung vor. Der erste Freilauf stellt bei Vorliegen einer ersten Drehrichtung des zweiten Antriebsaggregats bezüglich des ersten Antriebsaggregats eine Wirkverbindung zwischen den beiden Antriebsaggregaten her und unterbricht sie bei Vorliegen einer zweiten Drehrichtung, welche der ersten Drehrichtung entgegengesetzt ist.

Entsprechend kann so beispielsweise das erste Antriebsaggregat durch Betreiben des zweiten Antriebsaggregats mit der ersten Drehrichtung angetrieben werden, wohingegen das zweite Antriebsaggregat bei Vorliegen der zweiten Drehrichtung von dem ersten Antriebsaggregat entkoppelt ist und insoweit ausschließlich zum Antreiben des Nebentriebs herangezogen werden kann.

Zusätzlich zu dem ersten Freilauf oder alternativ zu dem ersten Freilauf kann die Schaltkupplung vorliegen. Diese dient zum gesteuerten Koppeln des zweiten Antriebsaggregats mit dem ersten Antriebsaggregat beziehungsweise dem Entkoppeln der beiden Antriebsaggregate voneinander. Anders ausgedrückt ist das zweite Antriebsaggregat in einer ersten Schaltstellung der Schaltkupplung mit dem ersten Antriebsaggregat gekoppelt, insbesondere starr, wohingegen in einer zweiten Schaltstellung der Schaltkupplung die beiden Antriebsaggregate vollständig voneinander entkoppelt sind.

Eine Weiterbildung der Erfindung sieht vor, dass das zweite Antriebsaggregat über einen zweiten Freilauf mit dem dritten Getriebeelement verbunden ist. Der zweite Freilauf ist derart ausgestaltet, dass er bei Vorliegen einer ersten Drehrichtung des zweiten Antriebsaggregats bezüglich des dritten Getriebeelements die Wirkverbindung zwischen diesen unterbricht und bei einer zweiten Drehrichtung, die der ersten Drehrichtung entgegengesetzt ist, herstellt. Insoweit kann mithilfe des zweiten Freilaufs beispielsweise das dritte Getriebeelement mittels des zweiten Antriebsaggregats angetrieben werden, wenn dieses mit der zweiten Drehrichtung betrieben wird.

Liegt dagegen die erste Drehrichtung vor, so ist das zweite Antriebsaggregat von dem dritten Getriebeelement entkoppelt. Die Koppelrichtung des zweiten Freilaufs ist beispielsweise der Koppelrichtung des ersten Freilaufs entgegengesetzt. Bevorzugt dient insoweit das zweite Antriebsaggregat bei Vorliegen der ersten Drehrichtung dem Antreiben des ersten Antriebsaggregats, wobei es von dem dritten Getriebeelement entkoppelt ist. Umgekehrt treibt das zweite Antriebsaggregat bei Vorliegen der zweiten Drehrichtung das dritte Getriebeelement an, wobei es von dem ersten Antriebsaggregat entkoppelt ist.

Eine weitere bevorzugte Ausgestaltung der Erfindung sieht vor, dass zwei der Getriebeelemente des Umlaufrädergetriebes über einen dritten Freilauf unmittelbar miteinander verbunden sind und/oder mittels einer Sperrkupplung gegeneinander festsetzbar sind. Der dritte Freilauf liegt zwischen den beiden Getriebeelementen des Umlaufrädergetriebes vor. Bei einer ersten Drehrichtung der beiden Getriebeelemente gegeneinander werden diese von dem dritten Freilauf miteinander gekoppelt, insbesondere starr. Bei einer zweiten Drehrichtung, die der ersten Drehrichtung entgegengerichtet ist, gibt der dritte Freilauf dagegen die beiden Getriebeelemente frei, sodass diese nicht über den dritten Freilauf miteinander gekoppelt sind.

Zusätzlich oder alternativ zu dem dritten Freilauf kann die Sperrkupplung vorgesehen sein, welche in einer ersten Schaltstellung die beiden Getriebeelemente gegeneinander festsetzt und in einer zweiten Schaltstellung zueinander freigibt. Mithilfe des dritten Freilaufs beziehungsweise der Sperrkupplung kann ein Verblocken des Umlaufrädergetriebes erzielt werden.

Schließlich kann im Rahmen einer weiteren Ausführungsform der Erfindung vorgesehen sein, dass das erste Getriebeelement als Umlaufradträger, das zweite Getriebeelement als Sonnenrad und das dritte Getriebeelement als Hohlrad vorliegt, wobei wenigstens ein an dem Umlaufradträger drehbar gelagertes Umlaufrad sowohl mit dem Sonnenrad als auch dem Hohlrad kämmt.

Das Umlaufrädergetriebe weist insoweit einen üblichen Aufbau auf. Es kann alternativ auch als Planetenradgetriebe bezeichnet werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug in einer ersten Ausführungsform, sowie
- Figur 2: die Antriebseinrichtung für das Kraftfahrzeug in einer zweiten Aus-führungsform.

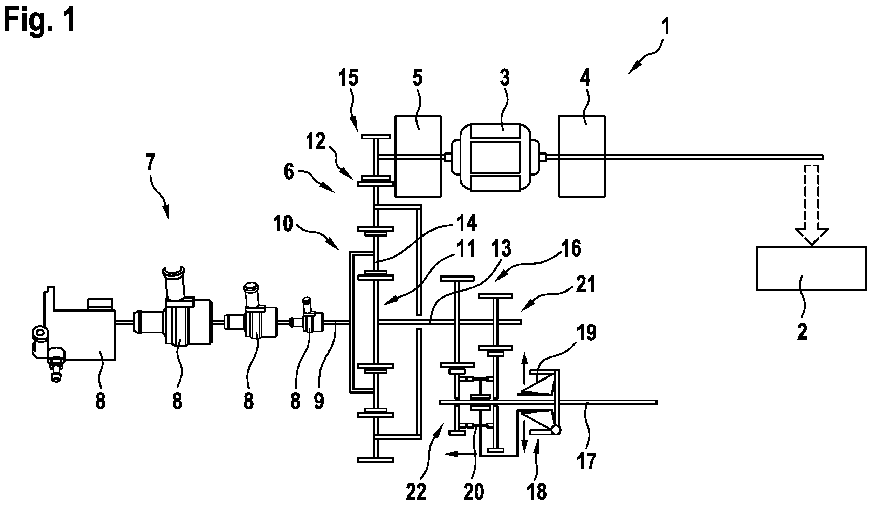

Die Figur 1 zeigt eine schematische Darstellung einer Antriebseinrichtung 1 für ein Kraftfahrzeug, welches hier nicht näher dargestellt ist. Die Antriebseinrichtung 1 dient dem Antreiben wenigstens einer Radachse des Kraftfahrzeugs, welches über zwei Teilachsen verfügen kann, die über ein Getriebe, insbesondere ein Achsdifferentialgetriebe, mit einer Abtriebswelle der Antriebseinrichtung wirkverbunden sind. Jeder der Teilachsen ist vorzugsweise wenigstens ein hier nicht dargestelltes Rad des Kraftfahrzeugs zugeordnet beziehungsweise mit diesem starr und/oder permanent verbunden.

Die Antriebseinrichtung 1 verfügt über ein erstes Antriebsaggregat 2 und ein zweites Antriebsaggregat 3. Die beiden Antriebsaggregate 2 und 3 können mittels einer Kupplung 4 wahlweise gekoppelt oder entkoppelt sein. Die Kupplung 4 kann in Form eines ersten Freilaufs oder alternativ einer Schaltkupplung vorliegen. Die Kupplung 4 ist jedoch optional. Es kann alternativ eine starre Kopplung zwischen den beiden Antriebsaggregaten 2 und 3 vorgesehen sein.

Das zweite Antriebsaggregat 3 ist über eine weitere Kupplung 5, welche in Form eines zweiten Freilaufs vorliegen kann, mit einem Umlaufrädergetriebe 6 gekoppelt. Über das Umlaufrädergetriebe 6 sind insoweit das erste Antriebsaggregat 2 und das zweite Antriebsaggregat 3 mit einem Nebentrieb 7 koppelbar, welcher über wenigstens ein Nebenaggregat 8, in der hier dargestellten Ausführungsform mehrere Nebenaggregate 8, verfügt. Das wenigstens eine Nebenaggregat 8 ist mit einer Nebentriebwelle 9 gekoppelt, welche ihrerseits mit dem Umlaufrädergetriebe 6 gekoppelt ist, insbesondere starr und/oder permanent.

Das Umlaufrädergetriebe 6 verfügt über ein erstes Getriebeelement 10, ein zweites Getriebeelement 11 und ein drittes Getriebeelement 12. Das erste Getriebeelement 10 ist mit dem Nebentrieb 7 beziehungsweise der Nebentriebwelle 9 gekoppelt, insbesondere starr und/oder permanent. Das dritte Getriebeelement 12 ist mit dem ersten Antriebsaggregat 2 und/oder dem zweiten Antriebsaggregat 3 (jeweils) gekoppelt oder koppelbar, insbesondere unter Verwendung der Kupplungen 4 und 5. Das zweite Getriebeelement 11 ist mit einer Zwischenwelle 13 gekoppelt, insbesondere starr und/oder permanent.

Es ist erkennbar, dass das erste Getriebeelement 10 als Umlaufradträger ausgestaltet ist, auf welchem wenigstens ein Umlaufrad 14 drehbar gelagert ist. Das Umlaufrad 14 kämmt einerseits mit dem als Sonnenrad ausgestalteten zweiten Getriebeelement 11 und andererseits mit dem als Hohlrad ausgestalteten dritten Getriebeelement 12. Die beiden Antriebsaggregate 2 und 3 sind über eine Zwischengetriebestufe 15 mit dem dritten Getriebeelement 12 koppelbar beziehungsweise gekoppelt.

Die Zwischenwelle 13 liegt als Ausgangswelle eines Gangwechselgetriebes 16 vor, das drehzahlabhängig geschaltet ist. Als Eingangswelle des Gangwechselgetriebes 16 dient eine Nebentriebantriebswelle 17, die mit der Abtriebswelle der Antriebseinrichtung 1 gekoppelt ist, insbesondere starr und/oder permanent, oder koppelbar ist. Insoweit kann die Nebentriebantriebswelle 17 unter Umgehung des Umlaufrädergetriebes 6 mit dem ersten Antriebsaggregat 2 gekoppelt oder koppelbar sein. Die Wirkverbindung zwischen dem ersten Antriebsaggregat 2 und der Nebentriebantriebswelle 17 liegt hierbei über ein Gangwechselgetriebe der Antriebseinrichtung vor, welche zwischen dem ersten Antriebsaggregat 2 und der Abtriebswelle der Antriebseinrichtung 1 vorgesehen ist.

Das drehzahlabhängige Schalten des Gangwechselgetriebes 16 wird mittels eines Fliehkraftstellers 18 realisiert, welcher mit der Nebentriebantriebswelle 17 gekoppelt ist, insbesondere starr und/oder permanent. Der Fliehkraftsteller 18 weist beispielsweise wenigstens ein Fliehkraftelement 19 auf, welches entgegen der Fliehkraft federkraftbeaufschlagt ist. Der Fliehkraftsteller 18 ist beispielsweise derart mit dem Gangwechselgetriebe 18 gekoppelt, dass eine Verlagerung des Fliehkraftelements 19 eine Verlagerung einer Schaltmuffe 20 des Gangwechselgetriebes 16 bewirkt.

In Abhängigkeit von der Stellung der Schaltmuffe 20 wird einer von mehreren Zahnradsätzen 21 und 22 mit der Nebentriebantriebswelle 17 gekoppelt. Die Zahnradsätze 21 und 22 liegen dabei jeweils zwischen der Nebentriebantriebswelle 17 und der Zwischenwelle 13 vor. Insbesondere sind die Zahnradsätze 21 und 22 jeweils ausgangsseitig starr und/oder permanent mit der Zwischenwelle 13 gekoppelt. Die Zahnradsätze 21 und 22 weisen voneinander verschiedene Übersetzungen auf.

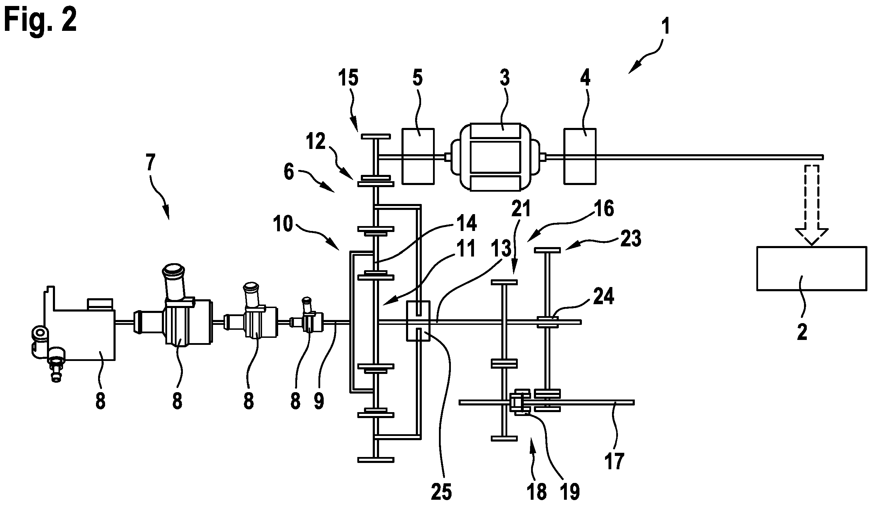

Die Figur 2 zeigt eine schematische Darstellung der Antriebseinrichtung 1 in einer zweiten Ausführungsform. Diese ist grundsätzlich ähnlich der vorstehend beschriebenen ersten Ausführungsform ausgestaltet, sodass auf die entsprechenden Ausführungen Bezug genommen und nachfolgend lediglich auf die Unterschiede eingegangen wird. Diese liegen darin, dass nur einer der Zahnradsätze 21 und 22, hier beispielsweise der Zahnradsatz 21, vorgesehen ist und anstelle des jeweils anderen Zahnradsatzes ein weiterer Zahnradsatz 23 realisiert ist. Dieser weitere Zahnradsatz 23 ist eingangsseitig mit der Nebentriebantriebswelle 17 gekoppelt, nämlich vorzugsweise starr und/oder permanent. Ausgangsseitig ist der weitere Zahnradsatz 23 mit dem zweiten Getriebeelement 11 beziehungsweise der Zwischenwelle 13 über einen Zahnradfreilauf 24 verbunden.

Der Fliehkraftsteller 18 ist nun derart ausgestaltet, dass er den Zahnradsatz 21 in Abhängigkeit von der Drehzahl der Nebentriebantriebswelle 17 mit dieser koppelt oder die Wirkverbindung zu ihr unterbricht. Mit einer derartigen Ausgestaltung wird eine konstruktive Vereinfachung bei nahezu gleicher Funktionalität wie bei der ersten Ausführungsform erzielt. Zusätzlich oder alternativ zu diesem Unterschied kann ein weiterer Unterschied darin bestehen, dass eine Kupplung 25 vorliegt, über welche zwei der Getriebeelemente 10, 11 und 12 des Umlaufrädergetriebes 6, in dem hier dargestellten Ausführungsbeispiel die Getriebeelemente 11 und 12, miteinander koppelbar sind. Die Kupplung 25 kann in Form eines dritten Freilaufs oder einer Sperrkupplung vorliegen.

Die vorstehend beschriebenen Ausführungsformen der Antriebseinrichtung 1 haben den Vorteil, dass ein Betreiben des Nebentriebs 7 nahezu unabhängig von einem Fahrzustand des Kraftfahrzeugs und/oder einem Betriebszustand des ersten Antriebsaggregats 2 erfolgen kann. Insbesondere kann kinetische Energie des Kraftfahrzeugs, falls sich dieses in Bewegung befindet, zum Antreiben des Nebentriebs 7 genutzt werden, wobei eine Drehzahl des Nebentriebs 7 beziehungsweise der Nebentriebwelle 9 insbesondere in diesem Fall mittels des zweiten Antriebsaggregats 3 über das Umlaufrädergetriebe 6 eingestellt werden kann, nämlich bevorzugt auf eine Solldrehzahl.

## Patentansprüche

1. Antriebseinrichtung (1) für ein Kraftfahrzeug, mit einem als Brennkraftmaschine ausgestalteten ersten Antriebsaggregat (2), einem als elektrische Maschine ausgestalteten zweiten Antriebsaggregat (3) sowie einem wenigstens ein Nebenaggregat (8) aufweisenden Nebentrieb (7), der über ein Umlaufrädergetriebe (6) mit dem ersten Antriebsaggregat (2) und dem zweiten Antriebsaggregat (3) jeweils gekoppelt oder koppelbar ist, wobei der Nebentrieb (7) mit einem ersten Getriebeelement (10) des Umlaufrädergetriebes (6) gekoppelt ist, wobei ein zweites Getriebeelement (11) des Umlaufrädergetriebes (6) über ein drehzahlabhängig geschaltetes Gangwechselgetriebe (16) mit einer unter Umgehung des Umlaufrädergetriebes (6) mit dem ersten Antriebsaggregat (2) gekoppelten oder koppelbaren Nebentriebantriebswelle (17) gekoppelt ist, wobei das Gangwechselgetriebe (16) mittels eines mit der Nebentriebantriebswelle (17) gekoppelten Fliehkraftstellers (18) angesteuert ist, **dadurch gekennzeichnet, dass** das zweite Antriebsaggregat (3) mit einem dritten Getriebeelement (12) des Umlaufrädergetriebes (6) gekoppelt oder koppelbar ist.

2. Antriebseinrichtung nach einem der vorhergehenden Ansprüche, **dadurch gekennzeichnet, dass** der Fliehkraftsteller (18) drehzahlabhängig einen ausgangsseitig mit dem Umlaufrädergetriebe (6) gekoppelten Zahnradsatz (21) oder einen von mehreren ausgangsseitig mit dem Umlaufrädergetriebe (6) gekoppelten Zahnradsätzen (21,22) mit der Nebentriebantriebswelle (17) koppelt.

3. Antriebseinrichtung nach Anspruch 2, **dadurch gekennzeichnet, dass** ein weiterer Zahnradsatz (23) eingangsseitig mit der Nebentriebantriebswelle (17) gekoppelt und ausgangsseitig mit dem zweiten Getriebeelement (11) über einen Zahnradfreilauf (24) verbunden ist.

4. Antriebseinrichtung nach einem der vorhergehenden Ansprüche, **dadurch gekennzeichnet, dass** das zweite Antriebsaggregat (3) über einen ersten Freilauf (4) mit dem ersten Antriebsaggregat (2) verbunden und/oder mittels einer Schaltkupplung mit dem ersten Antriebsaggregat (2) koppelbar ist.

5. Antriebseinrichtung nach Anspruch 4, **dadurch gekennzeichnet, dass** das zweite Antriebsaggregat (3) über einen zweiten Freilauf (5) mit dem dritten Getriebeelement (12) verbunden ist.

6. Antriebseinrichtung nach Anspruch 5, **dadurch gekennzeichnet, dass** zwei der Getriebeelemente (10,11,12) des Umlaufrädergetriebes (6) über einen dritten Freilauf (25) unmittelbar miteinander verbunden sind und/oder mittels einer Sperrkupplung gegeneinander festsetzbar sind.

7. Antriebseinrichtung nach einem der vorhergehenden Ansprüche, **dadurch gekennzeichnet, dass** das erste Getriebeelement (10) als Umlaufradträger, das zweite Getriebeelement (11) als Sonnenrad und das dritte Getriebeelement (12) als Hohlrad vorliegt, wobei wenigstens ein an dem Umlaufradträger drehbar gelagertes Umlaufrad (14) sowohl mit dem Sonnenrad als auch dem Hohlrad kämmt.

## Claims

1. Drive apparatus (1) for a motor vehicle, having a first drive assembly (2) designed as an internal combustion engine, a second drive assembly (3) designed as an electric engine, and an auxiliary drive (7) having at least one auxiliary assembly (8), which auxiliary drive is coupled to or can be coupled to the first drive assembly (2) and the second drive assembly (3) via an epicyclic gear transmission (6), wherein the auxiliary drive (7) is coupled to a first gear element (10) of the epicyclic gear transmission (6), wherein a second gear element (11) of the epicyclic gear transmission (6) is coupled via a gearshift transmission (16), which is shifted in a speed-dependent manner, to an auxiliary drive shaft (17) which is coupled or can be coupled to the first drive assembly (2) by bypassing the epicyclic gear transmission (6), wherein the gearshift transmission (16) is actuated by means of a centrifugal governor (18) that is coupled to the auxiliary drive shaft (17), **characterised in that** the second drive assembly (3) is coupled or can be coupled to a third gear element (12) of the epicyclic gear transmission (6).

2. Drive apparatus according to any of the preceding claims, **characterised in that** the centrifugal governor (18) couples, in a speed-dependent manner, a gear set (21) which is coupled to the epicyclic gear transmission (6) on the output side, or couples one of a plurality of gear sets (21, 22), which are coupled to the epicyclic gear transmission (6) on the output side, to the auxiliary drive shaft (17).

3. Drive apparatus according to claim 2, **characterised in that** a further gear set (23) is coupled on the input side to the auxiliary drive shaft (17) and on the output side to the second gear element (11) via a gear freewheel (24).

4. Drive apparatus according to any of the preceding claims, **characterised in that** the second drive assembly (3) is connected to the first drive assembly (2) by a first freewheel (4) and/or can be coupled to the first drive assembly (2) by a shift clutch.

5. Drive apparatus according to claim 4, **characterised in that** the second drive assembly (3) is connected to the third gear element (12) via a second freewheel (5).

6. Drive apparatus according to claim 5, **characterised in that** two of the gear elements (10, 11, 12) of the epicyclic gear transmission (6) are connected directly to each other via a third freewheel (25) and/or can be fixed against each other by means of a lockup clutch.

7. Drive apparatus according to any of the preceding claims, **characterised in that** the first gear element (10) is present as a planetary gear carrier, the second gear element (11) is present as a sun gear, and the third gear element (12) is present as a ring gear, wherein at least one planetary gear (14) that is mounted rotatably on the planetary gear carrier meshes with both the sun gear and the ring gear.

## Revendications

1. Appareil de propulsion (1) pour un véhicule automobile, avec un premier groupe de propulsion (2) configuré comme moteur à combustion interne, un second groupe de propulsion (3) configuré comme machine électrique ainsi qu'un mécanisme accessoire (7) présentant au moins un groupe accessoire (8) qui est ou peut être couplé respectivement par le biais d'un engrenage de roues planétaires (6) au premier groupe de propulsion (2) et au second groupe de propulsion (3), dans lequel le mécanisme accessoire (7) est couplé à un premier élément d'engrenage (10) de l'engrenage de roues planétaires (6), dans lequel un deuxième élément d'engrenage (11) de l'engrenage de roues planétaires (6) est couplé par le biais d'un engrenage de changement de vitesse (16) monté selon la vitesse de rotation à un arbre d'entraînement de mécanisme accessoire (17) couplé ou pouvant être couplé en contournant l'engrenage de roues planétaires (6) au premier groupe de propulsion (2), dans lequel l'engrenage de changement de vitesse (16) est commandé au moyen d'un régulateur d'allumage automatique (18) couplé à l'arbre d'entraînement de mécanisme accessoire (17), **caractérisé en ce que** le second groupe de propulsion (3) est ou peut être couplé à un troisième élément d'engrenage (12) de l'engrenage de roue planétaires (6).

2. Appareil de propulsion selon l'une quelconque des revendications précédentes, **caractérisé en ce que** le régulateur d'allumage automatique (18) couple en fonction de la vitesse de rotation un jeu de roues dentées (21) couplé côté sortie à l'engrenage de roues planétaires (6) ou un des plusieurs jeux de roues dentées (21, 22) couplés côté sortie à l'engrenage de roue planétaires (6) à l'arbre d'entraînement de mécanisme accessoire (17).

3. Appareil de propulsion selon la revendication 2, **caractérisé en ce qu'**un autre jeu de roues dentées (23) est couplé côté entrée à l'arbre d'entraînement de mécanisme accessoire (17) et est relié côté sortie au deuxième élément d'engrenage (11) par le biais d'une course libre de roue dentée (24).

4. Appareil de propulsion selon l'une quelconque des revendications précédentes, **caractérisé en ce que** le second groupe de propulsion (3) est relié par le biais d'une première course libre (4) au premier groupe de propulsion (2) et/ou peut être couplé au moyen d'un couplage de commutation au premier groupe de propulsion (2).

5. Appareil de propulsion selon la revendication 4, **caractérisé en ce que** le second groupe de propulsion (3) est relié par le biais d'une deuxième course libre (5) au troisième élément d'engrenage (12).

6. Appareil de propulsion selon la revendication 5, **caractérisé en ce que** deux des éléments d'engrenage (10, 11, 12) de l'engrenage de roues planétaires (6) sont reliés entre eux directement par le biais d'une troisième course libre (25) et/ou peuvent être fixés au moyen d'un couplage de verrouillage l'un contre l'autre.

7. Appareil de propulsion selon l'une quelconque des revendications précédentes, **caractérisé en ce que** le premier élément d'engrenage (10) se présente comme support de roue planétaire, le deuxième élément d'engrenage (11) se présente comme roue solaire et le troisième élément d'engrenage (12) se présente comme roue creuse, dans lequel au moins une roue planétaire (14) logée de manière rotative au niveau du support de roues planétaires s'engrène non seulement avec la roue solaire mais aussi la roue creuse.
